# EUROPÄISCHE PATENTSCHRIFT

(11) **EP 0 609 864 B1**
(45) Veröffentlichungstag und Bekanntmachung des Hinweises auf die Patenterteilung: **27.11.1996**
(21) Anmeldenummer: 94101563.8
(22) Anmeldetag: 02.02.1994
(51) Int. Cl.: C09K 3/14

(54) **Siliciumcarbid-Sinterschleifkorn und Verfahren zu dessen Herstellung**
Sintered silicon carbide abrasive grain and method of making it
Grain abrasif en carbure de silicium fritté et procédé de sa fabrication

(30) Priorität: 04.02.1993 CH 344/93
(43) Veröffentlichungstag der Anmeldung: 10.08.1994
(73) Patentinhaber: H.C. Starck GmbH & Co. KG, D-38642 Goslar (DE)
(72) Erfinder: Van Dijen, Franciscus, Dr., D-79802 Dettighofen (DE); Mayer, Edgar, D-79790 Küssaberg (DE)
(74) Vertreter: Steiling, Lothar, Dr.

(56) Entgegenhaltungen:
- DD-A- 300 288
- US-A- 3 649 310

## Beschreibung

Die vorliegende Erfindung betrifft ein Schleifkorn auf Basis von Siliciumcarbid, das durch Sintem von Siliciumcarbidpulver mit oxidischen Sinteradditiven herstellbar ist, sowie ein Verfahren zu dessen Herstellung.

Siliciumcarbid wird wegen seiner großen Härte seit Beginn seiner industriellen Herstellung nach dem Acheson-Prozeß in großem Umfang als Schleifmittel eingesetzt. Das im Acheson-Ofen in Form von groben Kristallen von einigen mm bis zu mehreren cm Größe anfallende Siliciumcarbid wird hierzu durch Brechen und Sieben auf die gewünschte Korngröße gebracht, was ziemlich aufwendig ist und ein breites Spektrum verschiedener Korngrößen liefert, auch wenn nur bestimmte Kömungen benötigt werden. Dies führt leicht zu einem Überangebot an weniger gefragten Kömungen, welche nicht oder nur zu geringeren Preisen abgesetzt werden können. Als wesentlicher technischer Nachteil des so hergestellten SiC-Schleifkoms ist dessen relativ geringe Zähigkeit zu nennen, welche als K_{IC}-Wert ausgedrückt ca. 3 MPa·m^{1/2} beträgt. Dies führt dazu, daß sich Siliciumcarbid trotz seiner großen Härte nicht für alle Schleifaufgaben eignet und bei der Bearbeitung einiger Werkstoffe durch Schleifmittel geringerer Härte, aber höherer Zähigkeit ersetzt wird.

Die US-A-3 649 310 offenbart Sinterkörper auf Basis Aluminiumnitrid/Siliciumcarbid. Diese sind erhältlich durch Umsetzung von Aluminiumcarbid und Siliciumnitrid. Dichte Körper können hiemach jedoch nur über das Heißpreß-Verfahren erhalten werden (Spalte 1, Zeilen 44 - 51 sowie 57 - 59).

Wünschenswert wäre daher ein Schleifmittel, das die große Härte des Acheson-Silicium-carbids mit einer wesentlich verbesserten Zähigkeit verbindet und dadurch auch für solche Schleifaufgaben eingesetzt werden kann, für die heute noch andere Schleifmittel gebräuchlich sind.

Es sind gesinterte Materialien auf Siliciumcarbidbasis bekannt, die durch Sintern von Siliciumcarbidpulver mit bor- und kohlenstoffhaltigen Zusätzen erhältlich sind. Die Zähigkeit dieser Materialien entspricht jedoch etwa der des gewöhnlichen Acheson-Siliciumcarbids, so daß eine Verwendung als Schleifmittel keine besonderen technischen Vorteile bringt und wegen des höheren Preises auch unwirtschaftlich wäre. Aufgabe der vorliegenden Erfindung war daher, ein Schleifkorn auf Siliciumcarbidbasis mit großer Härte und wesentlich verbesserter Zähigkeit bereitzustellen. Erfindungsgemäß wird diese Aufgabe durch das Schleifkorn nach Patentanspruch 1 und das Herstellungsverfahren nach Patentanspruch 3 gelöst.

Gegenstand dieser Erfindung ist somit ein gesintertes Schleifkorn auf Siliciumcarbidbasis, erhältlich durch druckloses Sintern von Siliciumcarbidpulver, gegebenenfalls mit Zusatz von weiteren Carbiden, Nitriden, Boriden oder hochschmelzenden Metallen, mit wenigstens einem Sinteradditiv bei 1700 bis 2200° C, dadurch gekennzeichnet, daß es als Sinteradditiv ein Gemisch aus Aluminiumoxid und Magne-siumoxid oder wenigstens ein Seltenerdoxid und/oder ein entsprechendes Doppel- oder Mischoxid enthält, und es eine Mikrohärte nach Vickers von wenigstens 22 GPa und eine Bruchzähigkeit K_{IC} von wenigstens 5 MPa·m^{1/2} aufweist.

Es wurde gefunden, daß Siliciumcarbidpulver mit oxidischen Sinteradditiven unter Normaldruck, also "drucklos", bei 1700 bis 2200° C zu hartem und zähem Schleifkorn gesintert werden kann. Als Siliciumcarbidpulver kann ein durch Mahlen von gewöhnlichem Acheson-Siliciumcarbid (α-Sic) erhältliches Pulver eingesetzt werden. Die Verwendung von Pulver aus β-SiC ist ebenfalls möglich.

Dem Siliciumcarbidpulver können gegebenenfalls andere Hartstoffe zugesetzt werden. Hierzu zählen andere Carbide wie beispielsweise Borcarbid oder Titancarbid, Nitride wie beispielsweise Titannitrid, Tantalnitrid, Bornitrid oder Aluminiumnitrid, Boride wie beispielsweise Titandiborid oder Zikondiborid oder hochschmelzende Metalle wie beispielsweise Wolfram.

Als Sinteradditive werden zweckmäßig Oxide, Doppeloxide oder Mischoxide des Aluminiums, Magnesiums oder der Seltenen Erden oder Gemische der genannten Verbindungen eingesetzt. Unter Doppeloxiden sind hierbei stöchiometrisch oder annähernd stöchiometrisch zusammengesetzte oxidische Verbindungen zweier oder mehrerer Metalle mit eigener Kristallstruktur zu verstehen, also beispielsweise Spinelle, Granate oder Perovskite. Unter Mischoxiden sind oxidische Verbindungen zweier oder mehrerer Metalle zu verstehen, die sich aus einem reinen Metalloxid durch Ersatz eines Teils der Metallatome durch Atome eines oder mehrerer anderer Metalle ableiten, ohne daß sich die Struktur ändert, also Mischkristalle oder feste Lösungen. Unter Seltenen Erden sind hier die Metalle Scandium, Yttrium, Lanthan und die Lanthaniden sowie deren Gemische zu verstehen. Bevorzugte Sinteradditive sind Gemische von Aluminiumoxid mit Magnesiumoxid oder wenigstens einem Seltenerdoxid sowie die entsprechenden Doppel- oder Mischoxide wie Spinelle oder Granate. Besonders bevorzugt als Sinteradditiv ist ein Gemisch aus Aluminiumoxid und Yttriumoxid oder eine entsprechende Verbindung wie Yttriumaluminiumgranat (YAG; Y₃Al₅O₁₂). Besonders gute Ergebnisse wurden mit einem Gemisch von Al₂O₃ und Y₂O₃ im Gewichtsverhältnis 3 : 2 (entsprechend einem Molverhältnis von ca. 3,3 : 1) erzielt.

Das erfindungsgemäße Schleifkorn hat eine Mikrohärte nach Vickers von vorzugsweise wenigstens 22 GPa und eine Bruchzähigkeit K_{IC} von wenigstens 5 MPa·m^{1/2}. Typische Werte sind ca. 25 - 27 GPa Härte und ca. 6 MPa·m^{1/2} Bruchzähigkeit.

Gegenstand der Erfindung ist auch ein Verfahren zur Herstellung des erfindungsgemäßen gesinterten Schleifkomes, wobei Siliciumcarbidpulver, gegebenenfalls mit Zusatz von weiteren Carbiden, Nitriden, Boriden oder hochschmelzenden Metallen, mit wenigstens einem Sinteradditiv bestehend aus einem Gemisch aus Aluminiumoxid und Magnesiumoxid oder wenigstens einem Seltenerdoxid und/oder ein entsprechendes Doppel- oder Mischoxid und/oder entsprechenden Vorläuferverbindungen, die beim Erhitzen in die genannten Oxide, Doppeloxide oder Mischoxide übergehen, gemischt, verfestigt und bei 1700 bis 2200° C unter Schutzgas drucklos gesintert und auf Schleifkorngröße zerkleinert wird.

Das erfindungsgemäße Schleifkorn kann dadurch hergestellt werden, daß Siliciumcarbidpulver, vorzugsweise solches der α-Modifikation, gegebenenfalls mit den oben erwähnten anderen Carbiden, Nitriden, Boriden oder Metallen und den Sinteradditiven gemischt, verfestigt und bei 1700 bis 2200° C unter Schutzgas drucklos gesintert wird. Anstelle der oben bereits erwähnten Oxide, Doppeloxide oder Mischoxide können jeweils auch entsprechende Vorläuferverbindungen wie beispielsweise Hydroxide oder Salze mit flüchtigen anorganischen oder organischen Säuren, also beispielsweise Nitrate, Carbonate oder Acetate, eingesetzt werden. Diese Vorläuferverbindungen zersetzen sich vor Erreichen der Sintertemperatur zu den entsprechenden Oxiden, welche dann als eigentliche Sinteradditive wirken. Das Mischen kann trocken oder vorzugsweise naß, also in Suspension, erfolgen. Als Suspendierungsmittel wird vorzugsweise Wasser, gegebenenfalls mit Zusatz von üblichen Hilfsstoffen wie Verflüssiger, Entschäumer oder pH-Regulatoren, verwendet. Es wurde gefunden, daß besonders gute Resultate bei einer schwach alkalischen wässrigen Suspension mit einem pH von ca. 8 - 11 erreicht werden. Zur Einstellung des pH kann beispielsweise Ammoniaklösung oder ein Amin zugesetzt werden. Es ist ebenso möglich, organische Flüssigkeiten wie beispielsweise Alkohole als Suspendierungsmittel zu verwenden. Weitere Hilfsstoffe wie beispielsweise Gleitmittel (zur besseren Verdichtung, wenn diese durch Pressen erfolgt) oder temporäre Binder (für ausreichende Festigkeit vor dem Sintern) werden vorteilhaft ebenfalls bei diesem Verfahrensschritt zugesetzt.

Der Mischvorgang wird vorzugsweise in einer Kolloidmühle, einem Attritor, einer Rührwerkskugelmühle, einer Ringspaltmühle oder einer Vibrationsmühle durchgeführt. Besonders bevorzugt sind Attritoren und Rührwerkskugelmühlen, insbesondere solche mit Mahlkörpern aus Siliciumcarbid. Besonders vorteilhaft wird das Mischen derart durchgeführt, daß gleichzeitig im Siliciumcarbidpulver oder den anderen festen Ausgangsmaterialien vorhandene Agglomerate zerstört und gegebenenfalls vorhandene grobe Teilchen zerkleinert werden. Dies kann zum Beispiel derart erfolgen, daß die zur Herstellung des Siliciumcarbidpulvers aus α-SiC erforderliche Feinstmahlung gleichzeitig mit dem Mischen im selben Verfahrensschritt durchgeführt wird.

Nach dem Mischen wird das Gemisch bzw. die Suspension zweckmäßig verfestigt, um sinterbare "Grünkörper" zu erhalten. Die Suspension kann hierzu beispielsweise filtriert und der erhaltene Filterkuchen getrocknet werden. Der getrocknete Filterkuchen kann dann, gegebenenfalls nach einer zusätzlichen Verdichtung durch Trockenpressen, auf die gewünschte Schleifkorngröße zerkleinert werden. Die Zerkleinerung kann beispielsweise mit einem Walzenbrecher erfolgen und ist weder mit großem Energieaufwand noch mit starkem Verschleiß verbunden, im Gegensatz zu der Zerkleinerung von Acheson-Siliciumcarbid bei der Herstellung von herkömmlichem SiC-Schleifkorn. Die Suspension kann, wenn sie bereits einen hohen Feststoffgehalt hat, auch ohne gesonderten Filtrationsschritt direkt getrocknet werden.

Bei der Zerkleinerung wird zweckmäßig das Schwinden beim Sintern berücksichtigt. Unerwünschte Feinanteile können abgesiebt und in das Verfahren zurückgeführt werden. Die Suspension kann auch sprühgetrocknet werden, so daß ein fließfähiges Granulat erhalten wird, das beispielsweise durch Trockenpressen verdichtet werden kann. Bei Verwendung entsprechender Preßwerkzeuge können so auch Schleifkömer definierter Form hergestellt werden.

Das Sintern erfolgt vorzugsweise bei 1800 bis 2200° C. Als Schutzgas kann beispielsweise Stickstoff oder ein Edelgas eingesetzt werden, bevorzugt ist Argon. Die Sinterdauer ist abhängig von der Temperatur, Art und Menge der Additive und der Sinteratmosphäre, sie beträgt beispielsweise bei 1900° C mit Al₂O₃/Y₂O₃ in Argonatmosphäre ca. 2 h.

Das Sintern kann sowohl in einem Pulverbett als auch ohne ein solches durchgeführt werden. Nach dem Sintern werden gegebenenfalls entstandene Agglomerate aufgebrochen und das Schleifkorn durch eine Siebung auf die gewünschte Korngrößenverteilung gebracht.

Die nachfolgenden Beispiele verdeutlichen die Herstellung des erfindungsgemäßen Schleifkorns, ohne daß darin eine Einschränkung auf die beschriebenen Ausführungsformen zu sehen ist.

### Beispiel 1

In einer Rührwerkskugelmühle (Nutzvolumen 12,5 l) mit Umlaufbehälter wurden 50 kg schwarzes α-SiC-Pulver (Typ UFB-10 der LONZA-Werke GmbH, Waldshut, Deutschland; spezifische Oberfläche 10m²/g), 3,33 kg Aluminiumoxidpulver (Typ CS 400, Martinswerk GmbH, Bergheim/Erft, Deutschland) und 2,22 kg Yttriumoxidpulver (H. C. Starck, Goslar, Deutschland) in 50 l entsalztem Wasser 8 Stunden gemischt. Als Mahlkörper wurden 25 kg Siliciumcarbidkugeln mit 2 mm Durchmesser verwendet. Der Suspension waren 0,5 kg eines Dispergiermittels auf Seifenbasis, 0,5 kg eines Aminoalkohols (als Base) und 0,25 kg Silikon-Entschäumer zugesetzt. Die Suspension wurde in einer Schichtdicke von 30 mm bei 100° C 24 Stunden getrocknet. Die so erhaltene feste Masse wurde mit einem Walzenbrecher zerkleinert und die Kornfraktion zwischen 0,1 mm und 1,4 mm ausgesiebt. Diese Körner wurden in einem Graphittiegel bei 1900° C unter Argon 2 Stunden bei Normaldruck gesintert. Nach dem Sintern wurde eine P-36 Körnung ausgesiebt. Die Mikrohärte des so erhaltenen Schleifkorns betrug 26 GPa (nach Vickers), die Bruchzähigkeit (K_{IC}) 6 MPa·m^{1/2}.

### Beispiel 2

In der im Beispiel 1 beschriebenen Rührwerkskugelmühle wurde der gleiche Ansatz wie in Beispiel 1 8 Stunden gemischt. Abweichend zu Beispiel 1 war noch 1 kg Polyethylenglykol (als Gleitmittel) und 2 kg Polyvinylalkohol (als temporärer Binder) zugesetzt.

Die Suspension wurde anschließend sprühgetrocknet und das so erhaltene Granulat mit einer Teilchengröße von ca. 0,1 mm bei einem Druck von 100 MPa zu Platten der Größe 90 x 90 x 20 mm³ gepreßt. Die Platten wurden mit einem Walzenbrecher zerkleinert und die weiteren Verfahrensschritte, wie in Beispiel 1 beschrieben durchgeführt. Auch nach dieser Vorgehensweise wurde Schleifkorn mit einer Härte von 26 GPa und einer Bruchzähigkeit von 6 MPa·m^{1/2} erhalten.

## Patentansprüche

1. Gesintertes Schleifkorn auf Siliciumcarbidbasis, erhältlich durch druckloses Sintern von Siliciumcarbidpulver, gegebenenfalls mit Zusatz von weiteren Carbiden, Nitriden, Boriden oder hochschmelzenden Metallen, mit wenigstens einem Sinteradditiv bei 1700 bis 2200° C, dadurch gekennzeichnet, daß es als Sinteradditiv ein Gemisch aus Aluminiumoxid und Magne-siumoxid oder wenigstens ein Seltenerdoxid und/oder ein entsprechendes Doppel-oder Mischoxid enthält, und es eine Mikrohärte nach Vickers von wenigstens 22 GPa und eine Bruchzähigkeit K_{IC} von wenigstens 5 MPA·m^{1/2} aufweist.

2. Gesintertes Schleifkorn nach Anspruch 1, dadurch gekennzeichnet, daß es als Sinteradditiv ein Gemisch aus Aluminiumoxid und Yttriumoxid und/oder ein entsprechendes Doppeloxid enthält.

3. Verfahren zur Herstellung von gesintertem Schleifkom auf Siliciumcarbidbasis, dadurch gekennzeichnet, daß Siliciumcarbidpulver, gegebenenfalls mit Zusatz von weiteren Carbiden, Nitriden, Boriden oder hochschmelzenden Metallen, mit wenigstens einem Sinteradditiv bestehend aus einem Gemisch aus Aluminiumoxid und Magnesiumoxid oder wenigstens einem Seltenerdoxid und/oder ein entsprechendes Doppel- oder Mischoxid und/oder entsprechenden Vorläuferverbindungen, die beim Erhitzen in die genannten Oxide, Doppeloxide oder Mischoxide übergehen, gemischt, verfestigt und bei 1700 bis 2200° C unter Schutzgas drucklos gesintert und auf Schleifkorngröße zerkleinert wird.

4. Verfahren nach Anspruch 3, dadurch gekennzeichnet, daß als Sinteradditiv ein Gemisch aus Aluminiumoxid und Yttriumoxid und/oder ein entsprechendes Doppeloxid eingesetzt wird.

5. Verfahren nach einem der Ansprüche 3 oder 4, dadurch gekennzeichnet, daß das Mischen in einer Suspension in einer Vorrichtung aus der Gruppe der Kolloidmühlen, Attritoren, Rührwerkskugelmühlen, Ringspaltmühlen und Vibrationsmühlen durchgeführt und die Suspension anschließend getrocknet wird.

6. Verfahren nach Anspruch 5, dadurch gekennzeichnet, daß das Mischen gleichzeitig mit der Zerkleinerung und/oder Desagglomeration des Siliciumcarbids durchgeführt wird.

7. Verfahren nach einem oder mehreren der Ansprüche 3 bis 6, dadurch gekennzeichnet, daß die Verfestigung des Gemisches aus Siliciumcarbidpulver und Sinteradditiven durch Trockenpressen erfolgt und die so verdichtete Masse anschließend auf Schleifkorngröße zerkleinert wird.

## Claims

1. A sintered abrasive grit based on silicon carbide, obtainable by the pressureless sintering of silicon carbide powder, optionally with the addition of further carbides, nitrides, borides or refractory metals, with at least one sintering additive at 1700 to 2200°C, characterised in that it contains, as a sintering additive, a mixture of alumina and magnesia or at least one rare earth oxide and/or a corresponding double or mixed oxide, and it has a Vickers microhardness of at least 22 GPa and a fracture toughness K_{IC} of at least 5 MPa.m^{1/2}.

2. A sintered abrasive grit according to claim 1, characterised in that it contains, as the sintering additive, a mixture of alumina and yttria and/or a corresponding double oxide.

3. A method of producing a sintered abrasive grit based on silicon carbide, characterised in that silicon carbide powder, optionally with the addition of further carbides, nitrides, borides or refractory metals, is mixed with at least one sintering additive consisting of a mixture of alumina and magnesia or at least one rare earth oxide and/or a corresponding double or mixed oxide and/or corresponding precursor compounds which transform on heating into the said oxides, double oxides or mixed oxides, is compacted, and is pressureless sintered under a protective gas at 1700 to 2200°C, and is comminuted to abrasive grit size.

4. A method according to claim 3, characterised in that a mixture of alumina and yttria and/or a corresponding double oxide is used as a sintering additive.

5. A method according to either one of claims 3 or 4, characterised in that mixing is effected in suspension in an apparatus from the group comprising colloid mills, attrition mills, agitated ball mills, annular gap mills and vibrating mills, and the suspension is subsequently dried.

6. A method according to claim 5, characterised in that mixing is effected simultaneously with the comminution and/or deagglomeration of the silicon carbide.

7. A method according to one or more of claims 3 to 6, characterised in that compaction of the mixture of silicon carbide powder and sintering additives is effected by dry pressing, and the material compacted in this manner is subsequently comminuted to abrasive grit size.

## Revendications

1. Grain abrasif fritté à base de carbure de silicium qu'on obtient par frittage sans pression d'une poudre de carbure de silicium, le cas échéant avec des adjonctions d'autres carbures, nitrures, borures ou métaux à haut point de fusion, avec au moins un additif de frittage à des températures de 1700 à 2 200°C, caractérisé en ce qu'il contient en tant qu'additif de frittage un mélange d'alumine et de magnésie ou d'au moins un oxyde des terres rares et/ou un oxyde double ou mélangé correspondant et en ce qu'il a une microdurcté selon Vickers d'au moins 22 GPa et une ténacité à la rupture K_{IC} d'au moins 5 MPa.m^{½}.

2. Grain abrasif selon revendication 1, caractérisé en ce qu'il contient en tant qu'additif de frittage un mélange d'alumine et d'oxyde d'yttrium et/ou un oxyde double correspondant.

3. Procédé de préparation d'un grain abrasif fritté à base de carbure de silicium, caractérisé en ce que l'on mélange une poudre de carbure de silicium, le cas échéant avec des adjonctions d'autres carbures, nitrures, borures ou métaux à haut point de fusion, avec au moins un additif de frittage consistant en un mélange d'alumine et de magnésie ou d'au moins un oxyde des terres rares et/ou un oxyde double ou mélangé correspondant et/ou les composés précurseurs correspondants qui, au chauffage, se transforment en les oxydes, oxydes doubles ou oxydes mélangés en question, on solidifie et on fritte sans pression en atmosphère de gaz inerte, à des températures de 1 700 à 2 200°C puis on broie à la dimension de grain abrasif voulue.

4. Procédé selon revendication 3, caractérisé en ce que l'on utilise en tant qu'additif de frittage un mélange d'alumine et d'oxyde d'yttrium et/ou un oxyde double correspondant.

5. Procédé selon une des revendications 3 ou 4, caractérisé en ce que le mélange est réalisé en suspension dans un appareil choisi parmi les broyeurs colloïdaux, les broyeurs "Attritor", les broyeurs à boulets et à agitateurs, les broyeurs à fentes annulaires et les broyeurs à vibrations, après quoi la suspension est séchée.

6. Procédé selon la revendication 5, caractérisé en ce que le mélange est réalisé en même temps que le broyage et/ou la désagglomération du carbure de silicium.

7. Procédé selon une ou plusieurs des revendications 3 à 6, caractérisé en ce que la solidification du mélange de la poudre de carbure de silicium et des additifs de frittage est réalisée par compression à sec, après quoi la masse comprimée est broyée à la dimension de grain abrasif voulue.
